# NOUVEAU FASCICULE DE BREVET EUROPEEN

(11) **EP 0 726 434 B2**
(45) Date de publication et mention de la décision concernant l'opposition: **22.10.2003**
(45) Mention de la délivrance du brevet: 27.10.1999
(21) Numéro de dépôt: 96400242.2
(22) Date de dépôt: 06.02.1996
(51) Int. Cl.: F25J 3/04, G01N 21/35

(54) **Méthode et appareil de surveillance de fonctionnement d'une installation de séparation d'air**
Verfahren und Vorrichtung zur Funktionsüberwachung einer Lufttrennungsanlage
Method and apparatus for monitoring the operation of an air separation plant

(30) Priorité: 07.02.1995 FR 9501388
(43) Date de publication de la demande: 14.08.1996
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Darredeau, Bernard, F-78500 Sartrouville (FR); Jacomet, Amélie, F-75017 Paris (FR)

(56) Documents cités:
- DE-A- 3 322 473
- US-A- 5 313 802
- PATENT ABSTRACTS OF JAPAN vol. 015, no. 358 (M-1156), 10 Septembre 1991 & JP-A-03 140788 (NIPPON SANSO KK), 14 Juin 1991,
- PATENT ABSTRACTS OF JAPAN vol. 4, no. 38 (C-004), 27 Mars 1980 & JP-A-55 013135 (HITACHI LTD), 30 Janvier 1980,
- F.W. Giacobbe, Gas Separation & Purification, Vol. 3, No. 3, pages 133-138, Butterworths 1989
- K. Winnacker, L. Küchler, Chemische Technologie, Bd.2, C. Hanser Verlag München, 1970
- PATENT ABSTRACTS OF JAPAN vol. 016, no. 516 (P-1443) 23 Octobre 1992 & JP 04 191 654 A (ELECTRIC POWER DEV CO LTD) 09 Juillet 1992
- W. Kölsch, L. Schwiegk, Linde Berichte aus Technik und Wissenschaft, Nr. 20, pages 49-51, 1965
- E. Karwat, Linde Berichte aus Technik und Wissenschaft, Nr. 10, pages 12-16, 1960

## Description

La présente invention a pour objet une méthode et un appareil de surveillance de fonctionnement d'une installation de séparation d'air ou de gaz de l'air par distillation cryogénique.

L'air traité dans ces installations de séparation d'air contient un certain nombre d'impuretés. La plupart d'entre elles, tels que les hydrocarbures et les oxydes d'azote, sont moins volatiles que l'oxygène et s'accumulent dans le liquide du bain du vaporiseur. Dans le cas d'une simple colonne, il s'agit d'un vaporiseur-condenseur de tête dans lequel s'accumule du liquide riche et dans le cas d'une double colonne, il s'agit généralement du vaporiseur-condenseur qui assure l'échange thermique entre l'oxygène de la colonne basse pression et soit l'azote de la colonne moyenne pression, soit de l'air pressurisé, soit tout autre fluide de cycle (préférentiellement l'azote à une pression différente de celle de la colonne moyenne pression).

Peu solubles (la solubilité n'étant que de quelques ppm seulement), ces impuretés présentent, seules ou en combinaison, divers dangers, en particulier des risques d'explosion. Il s'agit donc de les éliminer. Différents moyens sont utilisés pour prévenir toute accumulation, en particulier l'arrêt par adsorption, en phase liquide ou gazeuse tel que décrit dans DE-A-19.36.049, ou la purge du bain du vaporiseur.

La sécurité exige d'une part de prévenir l'accumulation des impuretés dangereuses, d'autre part de surveiller que l'élimination de celles-ci soit effective et efficace.

Jusqu'à ce jour, l'attention s'est essentiellement portée sur les hydrocarbures, en particulier l'acétylène. La surveillance du bon fonctionnement des moyens d'élimination se fait par suivi de la teneur en hydrocarbures, en général par chromatographie (par exemple, avec détection par ionisation de flamme), bien que l'analyse par chromatographie soit coûteuse et difdifficile à mettre en oeuvre.

Aujourd'hui, l'arrêt du dioxyde de carbone et de l'eau dans l'air d'alimentation d'une installation se fait par adsorption en amont de la séparation cryogénique. Un certain nombre d'impuretés de l'air, en particulier les hydrocarbures insaturés sont, au moins partiellement, arrêtées par cette épuration par adsorption. D'autres, comme une partie des oxydes d'azote, continuent à entrer dans la boîte froide qui contient la (ou les) colonne(s). Les moyens visant à prévenir l'accumulation de ces impuretés dans le bain du vaporiseur peuvent donc être allégés, à cause de la présence du système d'adsorption, mais non supprimés et il faut continuer à surveiller que les dispositifs mis en place dans ce but sont efficaces.

Quel que soit le fonctionnement d'un appareil muni d'un système d'adsorption en amont de la séparation cryogénique (produisant par exemple de l'oxygène liquide ou gazeux), les teneurs en hydrocarbures dans le bain du vaporiseur sont, la plupart du temps, négligeables et souvent non détectables, exception faite des alcanes (méthane, éthane, propane), mais la connaissance de leur teneur n'a pas d'intérêt puisque les dispositifs de prévention sont quasiment inefficaces vis-à-vis de ces polluants qui, par ailleurs, ne présentent pas de danger. La non-détection d'hydrocarbures ne signifie pas pour autant que les moyens de prévention en place sont efficaces puisque, le plus souvent, les facteurs limitants pour leur dimensionnement sont les oxydes d'azote. D'autre part, ils sont relativement difficiles à mesurer, et l'utilisation d'un chromatographe est à prévoir. La surveillance des hydrocarbures ne permet donc pas de vérifier, de façon simple et sûre, un fonctionnement efficace des moyens de sécurité mis en place.

"Use of physical adsorption to facilitate the production of high purity oxygen" de F.W. Giacobbe, Gas Separation and Purification 1989, Vol. 3, décrit une méthode de surveillance du fonctionnement d'une installation de séparation d'air selon la préambule de la revendication

L'invention a pour but de réaliser un appareil de surveillance du fonctionnement d'une installation de séparation d'air qui est facile à mettre en oeuvre et efficace pour détecter le mauvais fonctionnement des dispositifs mis en place pour éviter l'accumulation des impuretés dans le bain du vaporiseur.

A cet effet, l'invention a pour objet une méthode de surveillance du fonctionnement d'une installation de séparation d'air par distillation cryogénique selon la revendication 1.

Selon d'autres caractéristiques nouvelles de l'invention :
- on mesure la teneur en protoxyde d'azote du liquide en continu ;
- on mesure la teneur en protoxyde d'azote avec un analyseur à rayonnement infrarouge ;
- on mesure la teneur en protoxyde d'azote du liquide ;
- on détecte en continu les variations en la teneur en protoxyde d'azote du liquide.

L'invention a également pour objet une installation de séparation d'air par distillation cryogénique comprenant les caractéristiques de la revendication 6.

Selon d'autres caractéristiques :
- le vaporiseur-condenseur se trouve en cuve d'une colonne basse pression d'une double colonne ;
- les moyens pour détecter les variations comprennent un analyseur à rayonnement infrarouge.

Etant donné ses caractéristiques, le protoxyde d'azote paraît très approprié comme indicateur de fonctionnement efficace des moyens de sécurité. D'une part, sa teneur dans l'air est relativement constante, de l'ordre de 0,3 à 0,4 ppm. En régime stable de l'installation, la teneur en protoxyde d'azote du bain du vaporiseur-condenseur est donc constante et uniquement fonction des productions respectives d'oxygène liquide et gazeux de celle-ci. D'autre part, le protoxyde d'azote est un constituant peu volatil qui a donc tendance à s'accumuler dans le liquide du vaporiseur. Il est donc défavorable en terme de sécurité. Enfin, le protoxyde d'azote est relativement soluble dans l'oxygène liquide, ayant une solubilité de l'ordre de 180 ppm à 90K. Les teneurs maximales de protoxyde d'azote que l'on s'autorise dans le bain du vaporiseur sont donc facilement détectables, étant au voisinage de 20 à 30 ppm, dans l'oxygène liquide de la cuve d'une colonne basse pression.

Ces propriétés rendent la teneur en protoxyde d'azote du bain d'oxygène liquide ou du liquide riche du vaporiseur très sensible au fonctionnement de l'installation. En particulier, un mauvais fonctionnement d'une purge de sécurité, par exemple par suite d'un bouchage dans la conduite de purge) ou du vaporiseur (vaporisation à sec) se traduisent par des variations de teneur dans le bain de l'ordre de plusieurs ppm (parties par million), voire dizaines de ppm, qui sont donc très facilement détectables. Le suivi de la teneur en protoxyde d'azote du bain du vaporiseur permet donc une sur-surveillance efficace du fonctionnement des moyens de prévention.

Par ailleurs, l'analyse du protoxyde d'azote peut se faire par un analyseur à rayonnement infrarouge plus économique et plus simple d'utilisation qu'un chro-chromatographe. Cet analyseur permet de plus une analyse en continu de la teneur, ce que le chromatographe ne permet pas. L'analyseur peut être du type décrit dans J-A-04/191654. L'usage d'un chromatographe n'est pas à exclure néanmoins.

On peut donc remplacer l'analyse par chromatographie des hydrocarbures dans le liquide du vaporiseur par un suivi continu de la teneur en protoxyde d'azote (N₂O) de ce même liquide. Elle vise à rendre plus efficace et plus économique la surveillance du bon fonctionnement des moyens de prévention qui ont été mis en place pour éviter toute accumulation d'impuretés dans le voisinage du vaporiseur.

On peut également supprimer les filtres à liquide qui sont montés à côté des vaporiseurs dans les installations conventionnelles, en utilisant la présente invention. Les filtres, tels que décrits dans DE-A-19.36.049, servent à épurer l'oxygène liquide ou le liquide riche des bains des vaporiseurs et doivent être régénérés chaque semaine.

Le dispositif permettant de détecter au moins les variations en teneurs de protoxyde d'azote peut être monté sur la purge du vaporiseur-condenseur, qui permet d'épurer le bain de liquide en continu. Sinon, le dispositif peut être monté au niveau du bain du vaporiseur.

Cette invention s'applique aussi bien aux méthodes de surveillance d'installations comprenant un vaporiseur-condenseur du type désigné "à bain" qu'aux méthodes de surveillance d'installations comprenant un vaporiseur "à film" tel que décrit, par exemple, dans le brevet EP-B-130.122.

Si le niveau d'oxygène liquide n'est pas assez élevé, le vaporiseur va opérer "à sec" et ainsi le protoxyde d'azote se cristallisera dans les passages d'oxygène du vaporiseur. Ainsi, le bain de liquide autour du vaporiseur sera appauvri en protoxyde d'azote et l'analyseur détectera une chute dans la quantité de protoxyde d'azote.

Par contre, si le niveau de protoxyde d'azote augmente, ceci signifie que le débit de purge du vaporiseur est trop petit soit parce que la ligne de purge est bloquée, soit parce que la vanne d'ouverture de la purge n'est pas suffisamment ouverte.

Une hausse du niveau de protoxyde d'azote peut également résulter d'un dysfonctionnement des adsorbeurs d'épuration d'air. Dans ce cas, l'opérateur règlera la pression et/ou le temps de cycle de l'adsorbeur.

## Revendications

1. Méthode de surveillance du fonctionnement d'une installation de séparation d'air par distillation cryogénique comprenant une colonne de distillation, un vaporiseur-condenseur comportant un bain de liquide, et des moyens de prévention pour prévenir l'accumulation des impuretés dans le bain, **caractérisée en ce que** l'on surveille le fonctionnement des moyens de prévention en détectant les variations en la teneur en protoxyde d'azote du liquide qui s'accumule dans le vaporiseur-condenseur.

2. Méthode selon la revendication 1, selon laquelle on mesure la teneur en protoxyde d'azote avec un analyseur à rayonnement.

3. Méthode selon l'une des revendications 1 et 2, selon laquelle on mesure la teneur en protoxyde d'azote du liquide.

4. Méthode selon la revendication 3, selon laquelle on mesure la teneur en protoxyde d'azote du liquide en continu.

5. Méthode selon l'une des revendications précédentes, dans laquelle selon la variation en teneur de protoxyde d'azote, on élève le niveau du liquide dans le bain, on augmente le débit de purge du vaporiseur-condenseur ou on règle l'opération des adsorbeurs d'épuration d'air de l'installation.

6. Installation de séparation d'air par distillation cryogénique comprenant une colonne de distillation, un vaporiseur-condenseur comportant un bain de liquide, et des moyens de prévention pour prévenir l'accumulation des impuretés dans le bain, **caractérisée en ce qu'**elle comprend en outre un appareil de surveillance du fonctionnement des moyens de prévention, ledit appareil comprenant des moyens pour détecter les variations en la teneur en protoxyde d'azote du bain du vaporiseur-condenseur de l'installation.

7. Installation selon la revendication 6, dans laquelle le vaporiseur-condenseur se trouve en cuve d'une colonne basse pression d'une double colonne.

8. Installation selon l'une des revendications 6 et 7, dans laquelle les moyens pour détecter les variations comprennent un analyseur à rayonnement infrarouge.

9. Installation selon l'une des revendications 6 à 8, dans laquelle les moyens pour détecter les variations sont capables de mesurer la teneur en protoxyde d'azote du bain du vaporiseur-condenseur.

## Patentansprüche

1. Verfahren zur Funktionsüberwachung einer Anlage zur Luftzerlegung durch Tieftemperaturdestillation mit einer Destillationssäule, einem Verdampfer/Kondensator mit einem Flüssigkeitsbad sowie Verhinderungsmitteln zur Verhinderung der Ansammlung von Verunreinigungen in dem Bad, **dadurch gekennzeichnet, daß** man die Funktion der Verhinderungsmittel überwacht, indem man Variationen des Distickstoffmonoxidgehalts der sich im Verdampfer/Kondensator ansammelnden Flüssigkeit detektiert.

2. Verfahren nach Anspruch 1, bei dem man den Gehalt an Distickstoffmonoxid mit einem Strahlungsanalysator bestimmt.

3. Verfahren nach Anspruch 1 oder 2, bei dem man den Distickstoffmonoxidgehalt der Flüssigkeit bestimmt.

4. Verfahren nach Anspruch 3, bei dem man den Distickstoffmonoxidgehalt der Flüssigkeit fortlaufend bestimmt.

5. Verfahren nach einem der vorhergehenden Ansprüche, bei dem man entsprechend der Variation des Distickstoffmonoxidgehalts das Niveau der Flüssigkeit im Bad erhöht, den Ablaßdurchsatz des Verdampfer/Kondensators erhöht oder den Betrieb der Luftreinigungsadsorber der Anlage reguliert.

6. Anlage zur Luftzerlegung durch Tieftemperaturdestillation mit einer Destillationssäule, einem Verdampfer/Kondensator mit einem Flüssigkeitsbad sowie Verhinderungsmitteln zur Verhinderung der Ansammlung von Verunreinigungen in dem Bad, **dadurch gekennzeichnet, daß** sie außerdem einen Apparat zur Überwachung der Funktion der Verhinderungsmittel enthält, welcher Mittel zum Detektieren von Variationen des Distickstoffmonoxidgehalts des Bads des Verdampfer/Kondensators der Anlage enthält.

7. Anlage nach Anspruch 6, bei der sich der Verdampfer/Kondensator im Sumpf einer Niederdrucksäule einer Doppelsäule befindet.

8. Anlage nach Anspruch 6 oder 7, bei der die Mittel zum Detektieren von Variationen einen Infrarotstrahlungsanalysator umfassen.

9. Anlage nach einem der Ansprüche 6 bis 8, bei der die Mittel zum Detektieren von Variationen zur Bestimmung des Distickstoffmonoxidgehalts des Bads des Verdampfer/Kondensators befähigt sind.

## Claims

1. Method for monitoring the operation of a plant for separation of air by cryogenic distillation comprising a distillation column, an evaporator-condenser comprising a liquid bath, and prevention means for preventing the accumulation of impurities in the bath, **characterized in that** the operation of the prevention means is monitored by detecting the variations in the nitrous oxide content of the liquid which accumulates in the evaporator-condenser.

2. Method according to Claim 1, according to which the nitrous oxide content is measured with an infrared radiation analyser.

3. Method according to either of Claims 1 and 2, according to which the nitrous oxide content of the liquid is measured.

4. Method according to Claim 3, according to which the nitrous oxide content of the liquid is continuously measured.

5. Method according to one of the preceding claims, in which, depending on the variation in the nitrous oxide content, the level of the liquid in the bath is raised, the purge flowrate of the evaporator-condenser is increased or the operation of the air purification adsorbers of the plant is adjusted.

6. Plant for separation of air by cryogenic distillation comprising a distillation column, an evaporator-condenser comprising a liquid bath, and prevention means for preventing the accumulation of impurities in the bath, **characterized in that** it additionally comprises a device for monitoring the operation of the prevention means, the said device comprising means for detecting the variations in the nitrous oxide content of the bath of the evaporator-condenser of a plant.

7. Plant according to Claim 6, in which the evaporator-condenser is found in the tank of a low-pressure column of a double column.

8. Plant according to either of Claims 6 and 7, in which the means for detecting the variations comprise an infrared radiation analyser.

9. Plant according to one of Claims 6 to 8, in which the means for detecting the variations are capable of measuring the nitrous oxide content of the bath of the evaporator-condenser.
